# EUROPEAN PATENT SPECIFICATION

(11) **EP 4 434 800 B1**
(45) Date of publication and mention of the grant of the patent: **21.01.2026**
(21) Application number: 24164415.2
(22) Date of filing: 19.03.2024
(51) Int. Cl.: H01M 10/52, H01M 10/613, H01M 10/625, H01M 50/244, H01M 50/249

(54) **BATTERY ASSEMBLY FOR A MOTOR VEHICLE AND MOTOR VEHICLE COMPRISING THE SAME**
BATTERIEANORDNUNG FÜR EIN KRAFTFAHRZEUG UND KRAFTFAHRZEUG DAMIT
ENSEMBLE BATTERIE POUR UN VÉHICULE AUTOMOBILE ET VÉHICULE AUTOMOBILE LE COMPRENANT

(30) Priority: 21.03.2023 IT 202300005277
(43) Date of publication of application: 25.09.2024
(73) Proprietor: FERRARI S.p.A., 41100 Modena (IT)
(72) Inventor: FAVARETTO, Fabrizio, 41100 MODENA (IT)
(74) Representative: Studio Torta S.p.A.

(56) References cited:
- EP-A1- 3 961 779
- US-A1- 2015 037 616
- US-A1- 2015 037 649
- US-A1- 2015 372 355
- US-A1- 2017 225 588
- US-A1- 2017 279 169
- US-A1- 2021 178 902
- US-A1- 2021 195 808

## Description

### TECHNICAL FIELD

The invention relates to a battery assembly for a motor vehicle and to a motor vehicle comprising a battery assembly.

### BACKGROUND

As it is known electric or hybrid motor vehicles basically comprise:
- a frame;
- a plurality of wheels, which can rotate relative to the frame around respective rotational axes and are adapted to move the frame relative to the ground on which they rest;
- one or more electric motor means adapted to cause the wheels to rotate around the respective axes;
- one or more batteries electrically connected to the electric motors and accommodated inside a suitable container.

Furthermore, motor vehicles are known, which comprise systems for the adjustment of the temperature of the batteries. As a matter of fact, batteries operating at temperatures close to or below ambient temperature are characterised by a greater efficiency compared to batteries operating at higher temperatures. This allows manufacturers to reduce the portion of vehicle weight used to store power.

However, the humidity of the air naturally present in the container of the batteries tends to condense as the temperature of the batteries decreases. In particular, the inner walls of the container act as condensing plates for said humidity, which, once liquefied, tends to gather at the bottom of the container.

Since the overall dimensions of the container of the batteries in electric or hybrid vehicles can be very large, the quantity of condensate forming in the container risks determining short circuits.

Owing to the above, known motor vehicles need to be improved in order to limit the risk of short circuits due to the condensate forming in the containers of the batteries.

The object of the invention is to fulfil the need discussed above, preferably in a simple and reliable fashion.

### DESCRIPTION OF THE INVENTION

Said object is reached by a battery assembly for a motor vehicle as defined in claim 1.

The dependent claims define special embodiments of the invention.

### BRIEF DESCRIPTION OF THE DRAWINGS

Hereinafter, an embodiment of the invention will be described, in order to allow the latter to be better understood, by way of non-limiting example and with reference to the accompanying drawings, wherein:
- Figure 1 is a schematic side view of a motor vehicle comprising a battery assembly according to the invention and with parts removed for greater clarity;
- Figure 2 is a perspective view of the battery assembly of Figure 1;
- Figure 3 is a perspective view of the battery assembly of Figure 1 or 2 with parts removed for greater clarity;
- Figures 4 and 5 show the battery assembly in respective operating positions;
- Figures 6 and 7 are perspective views of a component of the battery assembly of Figures 1 to 5; and
- Figure 8 is a perspective sectional view of the battery assembly of Figure 4 with parts removed for greater clarity and on a much larger scale.

### EMBODIMENTS OF THE INVENTION

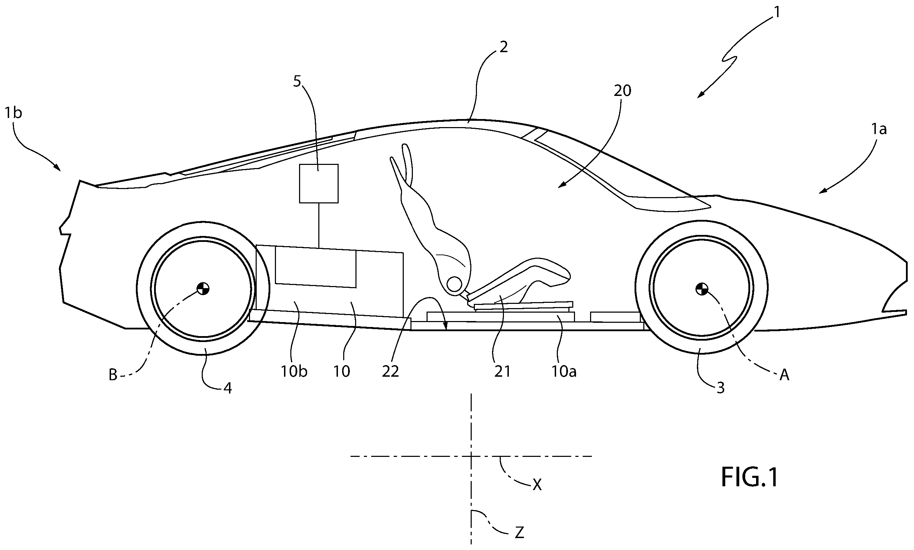

In figure 1, reference number 1 is used to indicate, as a whole, an electric or hybrid motor vehicle comprising:
- a frame 2;
- a plurality of wheels 3, 4, which can rotate around respective rotational axes A, B relative to frame 2;
- one or more electric motors 5 - only schematically shown - adapted to cause the wheels 3, 4 to rotate about the respective axes A, B; and
- a battery assembly 10.

The vehicle 1 defines a front portion 1a and a rear portion 1b opposite one another along a longitudinal direction X of the vehicle. Therefore, there are a pair of front wheels 3 arranged at front portion 1a and a pair of rear wheels 4 arranged at rear portion 1b.

The vehicle 1 could comprise an internal combustion engine and/or fuel cells. In addition, the vehicle 1 preferably is a sports car.

The frame 2 defines, in turn, a passenger compartment 20 adapted to accommodate the driver and possible passengers and comprising one or more seats 21. In the specific case shown herein, the vehicle 1 comprises one single pair of seats 21 (Figure 1).

The frame 2 also comprises a floorboard 22, which constitutes the portion of the frame 2 closest to the ground along a direction Z, which is orthogonal to the longitudinal direction X and to the ground on which the wheels 3, 4 rest (Figure 1).

The battery assembly 10 comprises, in turn, a case 11 defining an inner volume 12a, 12b, which is fluidly isolated from outside atmospheric air, and a plurality of batteries 13 accommodated in the inner volume 12a, 12b.

"Outside atmospheric air" means air present on the outside of the inner volume 12a, 12b. In particular, said outside atmospheric air could be inside the motor vehicle 1 or it could directly come from the outside of the motor vehicle 1.

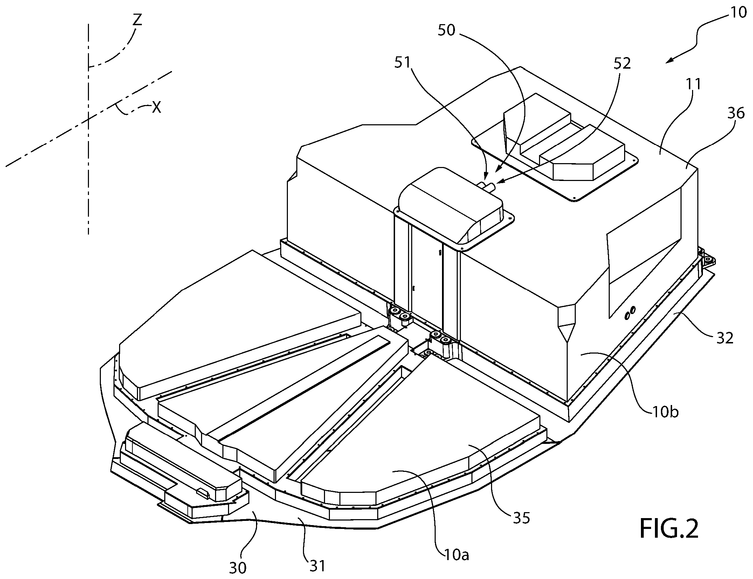

In the specific case shown herein, the battery assembly 10 comprises a front group 10a and a rear group 10b opposite one another along the longitudinal direction X. In detail, the extension of the front group 10a along the direction Z is smaller than the extension of the rear group 10b along the direction Z (Figure 2).

The battery assembly 10 is interposed between the front wheels 3 and the rear wheels 4 along the longitudinal direction X. More in detail, the front group 10a is located immediately under the seats 21 along the direction Z and the rear group 10b is located behind the seats 21 along the longitudinal direction X (Figure 1).

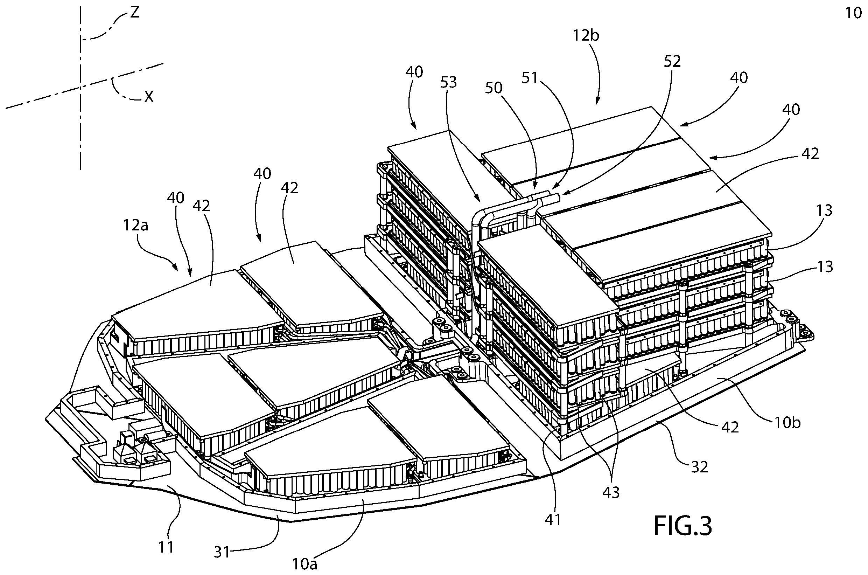

As shown in Figures 2 and 3, the front and rear groups 10a, 10b are mechanically connected to one another. Specifically, the case 11 comprises:
- a base body 30, to which the front and rear groups 10a, 10b are fixed or integrated and which is fixed to the floorboard 22;
- a lid 35, which is coupled to the base body 30 and covers the batteries 13 of the front group 10a; and
- a lid 36, which is coupled to the base body 30 and covers the batteries 13 of the rear group 10b.

The inner volume 12a is the volume enclosed by the base body 30 and by the lid 35 and the inner volume 12b is the volume enclosed by the base body 30 and by the lid 36. In the specific case shown herein, the inner volumes 12a and 12b are fluidly isolated from one another.

The base body 30 comprises, in turn:
- a plate 31 at the front group 10a; and
- a plate 32 at the rear group 10b, which is joined to or integrated in the plate 31 (Figure 2).

The front and rear groups 10a, 10b are arranged at an angle relative to one another (Figure 1). In detail, the plate 31 is parallel or substantially parallel to the ground and the plate 32 is inclined relative to the plate 31. More in detail, moving along the longitudinal direction X from the front portion 1a to the rear portion 1b, the distance between the rear group 10b and the ground along the direction Z increases in a progressive manner. The rear group 10b is inclined at an angle smaller than 10° - preferably ranging from 3° to 5° - relative to the front group 10a.

As shown in Figure 3, the front group 10a and the rear group 10b each comprise a plurality of batteries 13 next to one another and grouped in modules 40. The batteries 13 preferably are alike and have a cylindrical shape.

Each module 40 comprises a base plate 41 and a plate 42 opposite the plate 41 along the direction Z, the batteries 13 belonging to the module being interposed between them. Furthermore, the batteries 13 of each module 40 are parallel to or substantially parallel to the direction Z. Each module 40 can further comprise a plurality of columns 43, which are also interposed between the plate 41 and the relative plate 42. The assembly formed by the plates 41, 42 and by the columns 43 - if present - is adapted to support the batteries 13 and hold them firmly relative to one another.

In the specific case shown herein, the plates 41, 42 of the modules 40 of the front group 10a have trapezoid-like or substantially trapezoid-like shapes; the plates 41, 42 of the modules 40 of the rear group 10b are rectangular and are equal to one another.

The front group 10a comprises one single layer of modules 40 coplanar to one another and fixed to the plate 31. The rear group 10b comprises a plurality of layers of modules 40 stacked on top of one another parallel to the direction Z. In particular, in the rear group 10b, the plate 42 of each module 40 serves as base plate 41 of the respective module 40 arranged immediately on top of it along the direction Z.

The arrangement of the batteries 13 in the battery assembly 10 preferably is symmetrical relative to a middle plane parallel to the directions X and Z.

The battery assembly 10 can further comprise one or more power electronics devices (for example, inverters, choppers, switching devices) accommodated at the inner volume 12a, 12b.

The vehicle 1 also comprises a cooling system 50 (only partly shown in Figure 2) adapted to limit the temperature of the batteries 13. The temperature of the batteries 13 is the temperature measured at the outer surface of the batteries, close to it, or at the inner volume 12a, 12b in general.

The cooling system 50 comprises a circuit, where a cooling fluid flows, and a cooling fluid circulating pump, which is known per se and not shown herein.

The circuit comprises, in turn:
- an inlet opening 51 adapted to allow the cooling fluid to flow into the inner volume 12a, 12b;
- an outlet opening 52 adapted to allow the cooling fluid to flow out of the inner volume 12a, 12b;
- a fluid path 53, which is fluidly interposed between the inlet opening 51 and the outlet opening 52 and extends inside the battery assembly 10.

The fluid path 53 comprises at least some of the plates 41 and 42, which are hollow and are adapted to be flown through by the cooling fluid, and a plurality of ducts, which establish a fluid communication between the openings 51, 52 and the plates 41, 42 and between the plates 41, 42.

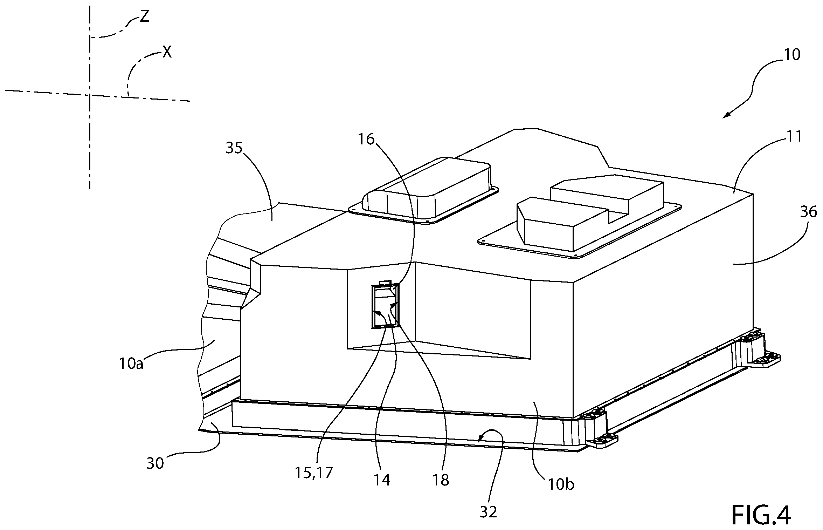

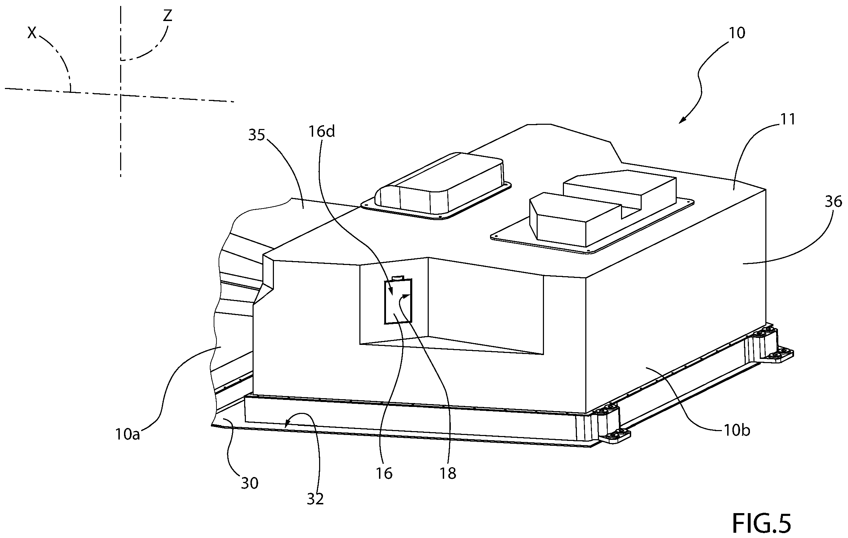

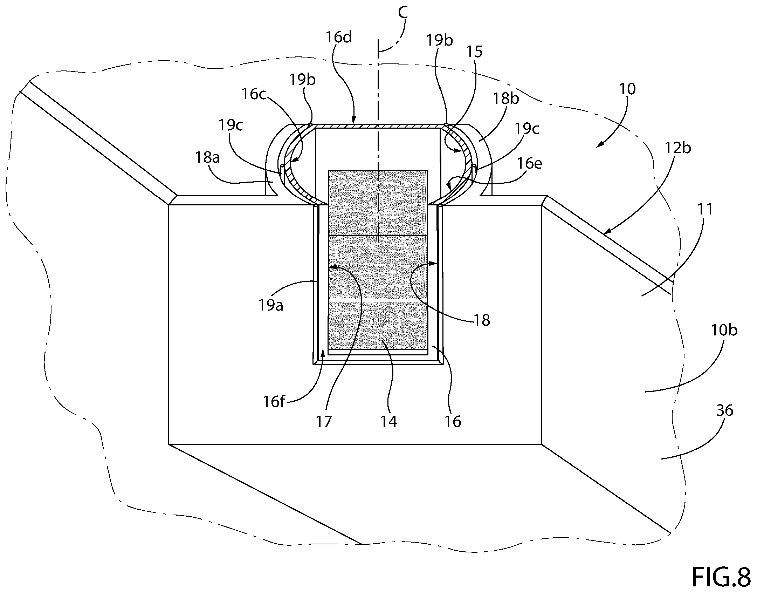

The battery assembly 10 advantageously comprises a passive dehydrating device 14 and an exchange volume 15, which accommodates the dehydrating device 14 and is selectively positionable in:
- a first position, in which the exchange volume 15 is fluidly connected to the inner volume 12b and fluidly isolated from outside atmospheric air (Figure 5); or
- a second position, in which the exchange volume 15 is fluidly isolated from the inner volume 12b and fluidly connected to outside atmospheric air (Figures 4 and 8).

Even though, in the embodiment shown herein, the battery assembly 10 comprises one single dehydrating device 14 adapted to dehumidify the inner volume 12b, the battery assembly 10 could comprise - alternatively or in addition - a dehydrating device 14 adapted to dehumidify the inner volume 12a. For the sake of brevity, hereinafter reference will be made to one single dehydrating device 14, since all considerations made for one of them also apply to the other ones.

A passive dehydrating device is a device capable of absorbing humidity from the air contained in the inner volume 12a, 12b due to the difference in concentration of humidity between the respective inner volume 12a, 12b and the dehydrating device 14. The operation of the dehydrating device 14 is based on the law of diffusion of humidity from the inner volume 12a, 12b to the dehydrating device 14. Therefore, the dehydrating device 14 is adapted to reduce the concentration of humidity in the relative inner volume 12a, 12b without requiring the supply of further energy.

Specifically, the dehydrating device 14 comprises a hygroscopic salt cartridge.

As shown in Figures 4 to 8, the battery assembly 10 comprises a container 16, which defines the exchange volume 15 and comprises an opening 17.

In detail, when the exchange volume 15 is in the first position, the opening 17 faces the inner volume 12b and establishes a fluid communication between the exchange volume 15 and the inner volume 12b (Figure 5). In this condition, the dehydrating device 14 is adapted to absorb humidity from the air contained in the inner volume 12b.

When the exchange volume 15 is in the second position, the opening 17 is fluidly isolated from the inner volume 12b and is accessible from the outside of the battery assembly 10 (Figures 4 and 8). In this condition, the dehydrating device 14 is accessible from the outside of the battery assembly 10 and can be replaced during maintenance operations.

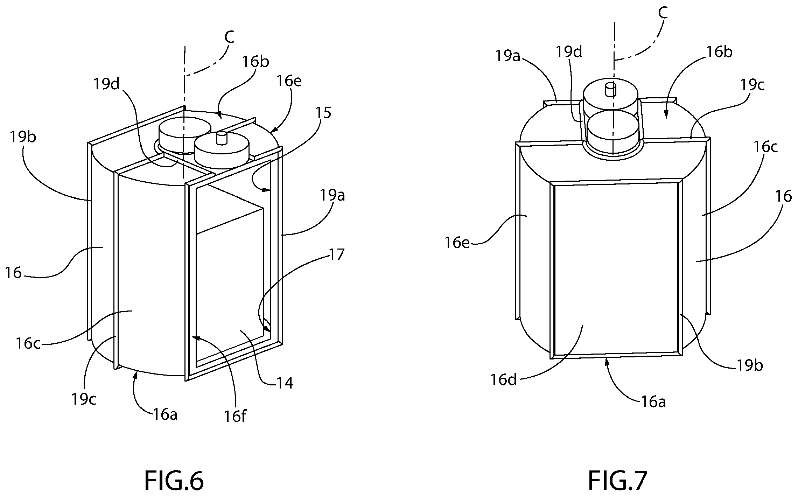

In the embodiment shown herein, the container 16 can rotate relative to the case 11 between the first and the second position around a rotational axis C, which is parallel or substantially parallel to the direction Z (Figures 6, 7 and 8). In detail, the rotation of the container 16 corresponds to a variation in the position of the opening 17 relative to the inner volume 12b.

More in detail, the case 11 comprises an opening 18, at which it is operatively coupled to the container 16. In the absence of the container 16, the opening 18 would establish a direct fluid communication between the inner volume 12b and outside atmospheric air.

The battery assembly 10 further comprises seals 19a, 19b, 19c, 19d interposed between the opening 18 and the container 16 (Figure 8). The seals 19a, 19b, 19c, 19d are adapted to prevent outside air from flowing into the inner volume 12b in an undesired manner. In particular, the seals 19a, 19b, 19c, 19d are adapted to avoid the undesired inflow of outside air both when the exchange volume 15 is in the first or in the second position and during the movement of the exchange volume 15 between the first and the second position.

As shown in Figures 6 and 7, the container 16 has a prismatic shape and comprises:
- a base wall 16a, which is flat and orthogonal to the axis C;
- a flat wall 16b, which is parallel to the wall 16a and opposite the latter along the axis C; and
- a plurality of side walls 16c, 16d, 16e and 16f interposed between the wall 16a and the wall 16b along the axis C.

In detail, the side walls 16c and 16e are curved; the walls 16d and 16f are flat and perpendicular to the walls 16a and 16b. More in detail, moving around the axis C in a clockwise direction, the walls 16c, 16d, 16e and 16f are arranged in succession (Figures 6 and 7).

The container 16 comprises the opening 17 at the wall 16f. The opening 17 preferably has a rectangular shape and has dimensions that are larger than or equal to the dimensions of the dehydrating device 14 (Figure 6).

The opening 18 has a shape corresponding to the outer shape of the container 16 (Figure 8). In detail, the case 11 comprises a wall 18a and a wall 18b, both extending starting from the lid 36 towards the inner volume 12b and defining the opening 18. More in detail, the walls 18a and 18b face the walls 16a and 16e of the container 16, respectively, and are shaped so as to allow the container 16 to rotate relative to the case 11 around the axis C (the shape of the walls 18a and 18b in Figure 8 is a mere example).

In the embodiment shown herein, the seals 19a, 19b, 19c, 19d are threadlike and are fixed to the outer surface of the container 16. In detail, the seal 19a is arranged at the wall 16f; the seal 19b is arranged at the wall 16d and the seals 19c and 19d are arranged in an intermediate position between the wall 16d and the wall 16f.

More in detail, the seal 19a extends at the edge between the wall 16f and the walls 16a, 16c, 16e adjacent thereto; the seal 19b extends at the edge between the wall 16d and the walls 16a, 16c, 16e adjacent thereto; the seal 19c extends along the walls 16c and 16e parallel to the axis C and along the wall 16b perpendicularly to the axis C; the seal 19d extends along the wall 16b and joins the seal 19a to the seal 19c. The seals 19a, 19c and 19d preferably form one single body.

The operation of the battery assembly 10 will be described hereinafter starting from a condition in which the exchange volume 15 is in the first position.

In use, the battery assembly 10 stores electrical energy and powers the electric motors 5. During its operation, the temperature of the batteries is limited by the cooling system 50.

Since the exchange volume 15 is in the first position, the exchange volume 15 is fluidly connected to the inner volume 12b and fluidly isolated from outside atmospheric air. As a consequence, the dehydrating device 14 absorbs the humidity of the air contained in the inner volume 12b due to the difference in concentration of humidity between the inner volume 12b and the dehydrating device 14. In this condition, the wall 16d faces the opening 18 (Figure 5).

During the maintenance and replacement operations to which the dehydrating device 14 is subjected, the container 16 is rotated about the axis C, until the exchange volume 15 reaches the second position (Figures 4 and 8). In this position, the exchange volume 15 is fluidly isolated from the inner volume 12b and the dehydrating device 14 is accessible through the opening 18.

In detail, during the rotation between the first and the second position, the seals 19a, 19b, 19c, 19d prevent outside atmospheric air from flowing into the inner volume 12b in an undesired manner.

Owing to the above, the advantages of the battery assembly 10 and of the motor vehicle 1 according to the invention are evident.

Since the battery assembly 10 comprises the dehydrating device 14, which is selectively fluidly connected to the inner volume 12b, the level of humidity in the inner volume 12b can be limited in a simple and economic fashion. As a consequence, the risk of short circuits due to the formation of condensate in the inner volume 12b can be reduced.

Since the exchange volume 15 can selectively be shifted to the first or to the second position, the dehydrating device 14 can be replaced during maintenance operations without allowing outside air to flow into the inner volume 12b. As a matter of fact, the exchange volume 15 can be fluidly connected to the sole outside air or to the sole inner volume 12b and cannot be fluidly connected to the outside air and to the inner volume 12b at the same time. As a consequence, the exchange volume 15 acts as compensation chamber.

Because of the fact that the dehydrating device 14 is of the passive kind, the level of humidity in the inner volume 12a, 12b can be limited without having to use external energy.

Since the exchange volume 15 is movable relative to the case 11 with a rotation movement about the axis C, the shift between the first and the second position can be carried out by hand in a user-friendly and efficient manner.

Since the battery assembly 10 comprises the seals 19a, 19b, 19c, 19d, it is possible to ensure that outside air does not reach, in an undesired manner, the inner volume 12a, 12b, for example during the rotation of the exchange volume 15. The inflow of outside air, indeed, would make the dehydrating device 14 ineffective.

Finally, the battery assembly 10 and the motor vehicle 1 according to the invention can be subjected to changes and variants, which, though, do not go beyond the scope of protection set forth in the appended claims.

In particular, the battery assembly 10 could comprise more than one dehydrating device 14. For instance, the battery assembly 10 could comprise more than one dehydrating device 14 at the front group 10a and/or more than one dehydrating device 14 at the rear group 10b.

## Claims

1. Battery assembly (10) for a motor vehicle (1), comprising:
- a case (11) defining an inner volume (12a, 12b); said inner volume (12a, 12b) being fluidly isolated from outside atmospheric air;
- a plurality of batteries (13) arranged within said inner volume (12a, 12b); **characterised in that** the battery assembly (10) further comprises:
- at least one passive dehydrating device (14);
- an exchange volume (15) housing said dehydrating device (14);
wherein said exchange volume (15) is selectively positionable relative to said case (11) in:
- a first position, wherein said exchange volume (15) is fluidly connected to said inner volume (12a, 12b) and fluidly isolated from outside atmospheric air; or
- a second position, wherein said exchange volume (15) is fluidly isolated from said inner volume (12a, 12b) and fluidly connected to outside atmospheric air.

2. **-** Battery assembly according to claim 1, wherein said dehydrating device (14) comprises a hygroscopic salt cartridge.

3. **-** Battery assembly according to claim 1 or 2, further comprising a container (16) defining said exchange volume (15) and comprising at least one opening (17);
said opening (17) facing said inner volume (12a, 12b) when said exchange volume (15) is, in use, in said first position;
said opening (17) being fluidly isolated from said inner volume (12a, 12b) and accessible from the outside of said battery assembly (10) when said exchange volume (15) is, in use, in said second position.

4. **-** Battery assembly according to claim 3, wherein said opening (17) is conformed to allow, in use, said dehydrating device (14) to be inserted and removed from said container (16), when said exchange volume (15) is, in use, in said second position.

5. **-** Battery assembly according to claim 3 or 4, wherein said container (16) is rotatable relative to said case (11) about a rotational axis (C).

6. **-** Battery assembly according to any one of claims 3 to 5, wherein said case (11) comprises a further opening (18); said container (16) being operatively coupled to said case (11) at said further opening (18);
said battery assembly (10) further comprising sealing means (19a, 19b, 19c) interposed between said further opening (18) and said container (16).

7. **-** Battery assembly according to claim 6, wherein said container (16) ha a prismatic shape and said further opening (18) has a shape corresponding to said container (16).

8. **-** Battery assembly according to any one of the foregoing claims, **characterized in that** it comprises one or more power electronic devices.

9. **-** Motor vehicle(1) comprising:
- a frame (2);
- a plurality of wheels (3, 4) rotatable about respective rotational axes (A, B) relative to said frame (2);
- electrical motor means (5) operatively connected to said wheels (3, 4) and adapted to drive said wheels (3, 4) in rotation about said rotational axes (A, B);
**characterised in that** the motor vehicle (1) further comprises:
- a battery assembly (10) according to any one of the foregoing claims; said plurality of batteries (13) of said battery assembly (10) being electrically connected to said electrical motor means (5).

10. **-** Motor vehicle according to claim 9, comprising a cooling system (50) adapted to limit the temperature of said batteries (13).

## Patentansprüche

1. Batterieanordnung (10) für ein Kraftfahrzeug (1), umfassend:
- ein Gehäuse (11), das ein Innenvolumen (12a, 12b) definiert; wobei das Innenvolumen (12a, 12b) fluidisch von der atmosphärischen Außenluft isoliert ist;
- eine Vielzahl von Batterien (13), die innerhalb des Innenvolumens (12a, 12b) angeordnet sind; **dadurch gekennzeichnet, dass** die Batterieanordnung (10) ferner Folgendes umfasst:
- mindestens eine passive Dehydrierungsvorrichtung (14);
- ein Austauschvolumen (15), das die Dehydrierungsvorrichtung (14) aufnimmt;
wobei das Austauschvolumen (15) selektiv relativ zu dem Gehäuse (11) positionierbar ist in:
- eine erste Position, in der das Austauschvolumen (15) fluidisch mit dem Innenvolumen (12a, 12b) verbunden und fluidisch von atmosphärischer Außenluft isoliert ist; oder
- eine zweite Position, in der das Austauschvolumen (15) fluidisch von dem Innenvolumen (12a, 12b) isoliert und fluidisch mit atmosphärischer Außenluft verbunden ist.

2. Batterieanordnung nach Anspruch 1, wobei die Dehydrierungsvorrichtung (14) eine hygroskopische Salzkartusche umfasst.

3. Batterieanordnung nach Anspruch 1 oder 2, ferner umfassend einen Behälter (16), der das Austauschvolumen (15) definiert und mindestens eine Öffnung (17) umfasst;
wobei die Öffnung (17) dem Innenvolumen (12a, 12b) zugewandt ist, wenn sich das Austauschvolumen (15) im Gebrauch in der ersten Position befindet;
wobei die Öffnung (17) fluidisch von dem Innenvolumen (12a, 12b) isoliert ist und von der Außenseite der Batterieanordnung (10) zugänglich ist, wenn sich das Austauschvolumen (15) im Gebrauch in der zweiten Position befindet.

4. Batterieanordnung nach Anspruch 3, wobei die Öffnung (17) so angepasst ist, dass die Dehydrierungsvorrichtung (14) im Gebrauch in den Behälter (16) eingeführt und aus diesem entfernt werden kann, wenn sich das Austauschvolumen (15) im Gebrauch in der zweiten Position befindet.

5. Batterieanordnung nach Anspruch 3 oder 4, wobei der Behälter (16) relativ zu dem Gehäuse (11) um eine Drehachse (C) drehbar ist.

6. Batterieanordnung nach einem der Ansprüche 3 bis 5, wobei das Gehäuse (11) eine weitere Öffnung (18) umfasst; wobei der Behälter (16) an der weiteren Öffnung (18) mit dem Gehäuse (11) betriebswirksam verbunden ist;
wobei die Batterieanordnung (10) ferner Dichtungsmittel (19a, 19b, 19c) umfasst, die zwischen der weiteren Öffnung (18) und dem Behälter (16) angeordnet sind.

7. Batterieanordnung nach Anspruch 6, wobei der Behälter (16) eine prismatische Form aufweist und die weitere Öffnung (18) eine Form aufweist, die dem Behälter (16) entspricht.

8. Batterieanordnung nach einem der vorhergehenden Ansprüche, **dadurch gekennzeichnet, dass** sie eine oder mehrere leistungselektronische Vorrichtungen umfasst.

9. Kraftfahrzeug (1), umfassend:
- einen Rahmen (2);
- eine Vielzahl von Rädern (3, 4), die um jeweilige Drehachsen (A, B) relativ zu dem Rahmen (2) drehbar sind;
- Elektromotormittel (5), die betriebswirksam mit den Rädern (3, 4) verbunden und dazu ausgelegt sind, die Räder (3, 4) in Drehung um die Drehachsen (A, B) anzutreiben; **dadurch gekennzeichnet, dass** das Kraftfahrzeug (1) ferner Folgendes umfasst:
- eine Batterieanordnung (10) nach einem der vorhergehenden Ansprüche; wobei die Vielzahl von Batterien (13) der Batterieanordnung (10) elektrisch mit den Elektromotormitteln (5) verbunden ist

10. Kraftfahrzeug nach Anspruch 9, umfassend ein Kühlsystem (50), das ausgelegt ist, um die Temperatur der Batterien (13) zu begrenzen.

## Revendications

1. Ensemble batterie (10) pour un véhicule automobile (1), comprenant :
- un boîtier (11) définissant un volume intérieur (12a, 12b) ; ledit volume intérieur (12a, 12b) étant isolé de manière fluidique de l'air atmosphérique extérieur ;
- une pluralité de batteries (13) disposées dans ledit volume intérieur (12a, 12b) ; **caractérisé en ce que** l'ensemble batterie (10) comprend en outre :
- au moins un dispositif de déshydratation passif (14) ;
- un volume d'échange (15) logeant ledit dispositif de déshydratation (14) ;
ledit volume d'échange (15) étant sélectivement positionnable par rapport audit boîtier (11) dans :
- une première position, dans laquelle ledit volume d'échange (15) est relié de manière fluidique audit volume intérieur (12a, 12b) et isolé de manière fluidique de l'air atmosphérique extérieur ; ou
- une seconde position, dans laquelle ledit volume d'échange (15) est isolé de manière fluidique dudit volume intérieur (12a, 12b) et relié de manière fluidique à l'air atmosphérique extérieur.

2. Ensemble batterie selon la revendication 1, ledit dispositif de déshydratation (14) comprenant une cartouche de sel hygroscopique.

3. Ensemble batterie selon la revendication 1 ou 2, comprenant en outre un récipient (16) définissant ledit volume d'échange (15) et comprenant au moins une ouverture (17) ;
ladite ouverture (17) faisant face audit volume intérieur (12a, 12b) lorsque ledit volume d'échange (15) se trouve, lors de l'utilisation, dans ladite première position ;
ladite ouverture (17) étant de manière fluidique isolée dudit volume intérieur (12a, 12b) et accessible de l'extérieur dudit ensemble batterie (10) lorsque ledit volume d'échange (15) se trouve, lors de l'utilisation, dans ladite seconde position.

4. Ensemble batterie selon la revendication 3, ladite ouverture (17) étant conformée pour permettre, lors de l'utilisation, l'insertion et le retrait dudit dispositif de déshydratation (14) dudit récipient (16), lorsque ledit volume d'échange (15) se trouve, lors de l'utilisation, dans ladite seconde position.

5. Ensemble batterie selon la revendication 3 ou 4, ledit récipient (16) étant rotatif par rapport audit boîtier (11) autour d'un axe de rotation (C).

6. Ensemble batterie selon l'une quelconque des revendications 3 à 5, ledit boîtier (11) comprenant une ouverture supplémentaire (18) ; ledit récipient (16) étant couplé de manière fonctionnelle audit boîtier (11) au niveau de ladite ouverture supplémentaire (18) ;
ledit ensemble batterie (10) comprenant en outre des moyens d'étanchéité (19a, 19b, 19c) interposés entre ladite ouverture supplémentaire (18) et ledit récipient (16).

7. Ensemble batterie selon la revendication 6, ledit récipient (16) ayant une forme prismatique et ladite ouverture supplémentaire (18) ayant une forme correspondant audit récipient (16).

8. Ensemble batterie selon l'une quelconque des revendications précédentes, **caractérisé en ce qu'**il comprend un ou plusieurs dispositifs électroniques de puissance.

9. Véhicule automobile (1) comprenant :
- un châssis (2) ;
- une pluralité de roues (3, 4) pouvant tourner autour d'axes de rotation (A, B) respectifs par rapport audit châssis (2) ;
- un moyen de motorisation électrique (5) relié de manière fonctionnelle auxdites roues (3, 4) et adapté pour entraîner lesdites roues (3, 4) en rotation autour desdits axes de rotation (A, B) ; **caractérisé en ce que** le véhicule automobile (1) comprend en outre :
- un ensemble batterie (10) selon l'une quelconque des revendications précédentes ; ladite pluralité de batteries (13) dudit ensemble batterie (10) étant branchée électriquement audit moyen de motorisation électrique (5)

10. Véhicule automobile selon la revendication 9, comprenant un système de refroidissement (50) adapté pour limiter la température desdites batteries (13).
